Europäisches Patentamt

European Patent Office

Office européen des brevets

(19)

(11) Publication number: **0 039 983**
**B1**

(12) # EUROPEAN PATENT SPECIFICATION

(45) Date of publication of patent specification: **18.04.84**

(51) Int. Cl.³: **B 29 B 3/00, B 29 F 3/00**

(21) Application number: **81200515.5**

(22) Date of filing: **14.05.81**

(54) Process for the preparation of a polymer.

(30) Priority: **14.05.80 NL 8002782**

(43) Date of publication of application:
**18.11.81 Bulletin 81/46**

(45) Publication of the grant of the patent:
**18.04.84 Bulletin 84/16**

(84) Designated Contracting States:
**AT BE DE FR GB IT NL SE**

(56) References cited:
**GB - A - 1 126 098**
**US - A - 3 293 918**
**US - A - 3 593 011**
**US - A - 3 608 001**

(73) Proprietor: **STAMICARBON B.V.**
**Postbus 10**
**NL-6160 MC Geleen (NL)**

(72) Inventor: **Dané, Lambertus Maria**
**Eickhovenstraat 7**
**NL-6367 BZ Voerendaal (NL)**
Inventor: **Engels, Johannes Carolus Augustinus**
**Heistraat 2**
**NL-6136 BD Sittard (NL)**
Inventor: **Stevens, Cornelis Lambertus**
**Boerhaavestraat 9**
**NL-6164 GP Geleen (NL)**

(74) Representative: **Hatzmann, Marinus Jan et al,**
**OCTROOIBUREAU DSM P.O.Box 9**
**NL-6160 MA Geleen (NL)**

Courier Press, Leamington Spa, England.

Process for the preparation of a polymer

The invention relates to a process including the steps of the preparation of a polymer followed by continuous inspection of the polymer quality and subsequently storage of the polymer, wherein a sample flow is continuously drawn off from a flow of solid polymer particles and this sample flow is analysed.

In the continuous preparation of polymers it is necessary to regularly analyse the quality of the product obtained so that deviations of the product from the required specifications can timely be detected and corrected. Preferably this is done continuously. GB—A—1,126,098 discloses a granulator and a water cooling system, wherein a cooling water pipe is provided with a sluice which opens a branch pipe for the removal of defective granular product. The system is not suitable for continuous sampling the granulate, and moreover there is no residence time bunker.

In US—A—3,293,918 an apparatus is described for continuously sampling a flow of polymer particles and determining the melt index of the sample. The process is then controlled in dependence of the analytical results. This can be done manually or directly by computer, without human intervention.

After the polymerization the polymer is extruded and granulated and the granules obtained are mixed and transported to storage facilities. The passing through these sections may sometimes result in contamination of the polymer. Serious contamination, in the form of oxidized or charred polymer, can be detected already by visual inspection of the granule.

It is, however, impossible to determine the processing behaviour of the polymer by visual inspection of the granules.

In addition, the inspection for the presence of gel particles in the polymer poses a problem.

The problem is that the presence of gel particles cannot be established from the appearance of the granulate. Small quantities of polymer possess a molecular structure that deviates from that of the mass of the material. The deviations in molecular weight or molecular weight distribution may be caused by polymer decomposition, cross-linking or oxidation. As a consequence the so-called gel particles exhibit deviating flow properties.

These deviating flow properties are important especially when the polymer is processed into film. The gel particles deform the film in their direct surroundings and thus can be clearly observed optically. Their size may vary from 100 $\mu$m to 1 cm. In addition, these particles may cause the formation of holes and possibly even fractures in the film.

Polymers that are known to present this problem are polyolefins such as polymers of ethylene and propylene or copolymers of these monomers with other monomers.

Polymers are usually monitored for the presence of gels by off-line processing of the granulate into film. Specially trained laboratory technicians visually examine the gel level, check the processability to film and the minimum film thickness and inspect the material for the presence of holes and fractures, etc.

As a result, the visual gel content determination is characterized by subjectivity and, linked with this, limited reproducibility and accuracy.

Analytical equipment exists with which the gel content of a film can be measured continuously. The use of this equipment significantly improves the reproducibility and the accuracy of the test method.

However, whereas it is possible to control the process parameters by monitoring the polymer melt index, like in US—A—3,293,918, it is not possible to control (or reduce) the gel content of polymers by changing the process conditions. Still, the gel content supplies the operator with valuable information on the quality, which he can use in selecting the granulate

Since, as indicated above, the processing into film and the determination of the gel content take place off-line, it is impossible for small lots with deviating product specifications such as poor film properties to be isolated timely, before mixing and storage. As a consequence, substantially larger quantities of polymer have to be rejected on the basis of their specifications than would have been necessary if the deviating lot in question could have been isolated timely.

The object of the invention therefore is to supply a process offering the possibility to continuously determine the quality of the polymer prepared and, if necessary, to isolate polymer of insufficient quality before mixing and storage.

The process according to the invention is characterized in that the flow of polymer particles is, after the sample flow is drawn off, led into a residence time bunker, in which the residence time equals the time required for analysis or does not differ more than 10% therefrom, and the flow of polymer particles leaving the residence time bunker is transported further dependent on the analytical result.

By preference the sample flow is supplied to an extruder, subsequently film is made of it and this film is analysed.

This analysis can be performed by means of gel counter, a clarity meter, a gloss meter, etc., and can be performed on cast film or on blown film.

It has been found that the process according to the invention allows the off-spec polymer to be separated from the rest of the polymer in a very simple way, so that the percentage of product that has to be rejected in the final inspection on the basis of the specifications is substantially lower.

Residence time bunker is in this context understood to be a bunker, silo or similar facility in which the flow of polymer particles that passes through the bunker has a constant residence time without large-scale mixing of the product occurring. As residence time bunker, for instance, a normal storage bunker with conical bottom may be used, the discharge opening of the bunker being modified in such a way that substantially no mixing of the product occurs. Another, more expensive solution may be the use of a long transport line in which a sufficiently long residence time is created.

Sampling from the flow of polymer particles may take place in a known way, for instance as described in US—A—3,293,918.

The process according to the invention is preferably applied in the preparation of high-, medium-, or low-density polyethylene or of polypropylene, including copolymers of ethylene and propylene with each other or with other monomers, and more specifically in the preparation of polyethylene under high pressure (500—7000 bar).

The invention also relates to an installation for the preparation of a polymer comprising, inter alia, a reaction section and a transport line for transport of a flow of solid polymer particles from the reaction section to a storage facility, the transport line being provided with a sampling device which is, via a second transport line, connected with an analytical equipment.

The installation according to the invention is characterized in that the analytical equipment can transmit a signal to a distribution device in the storage facility, while a residence time bunker is installed in the transport line between the sampling device and the storage facility.

The invention will now be elucidated on the basis of a drawing in which

Fig. 1 represents the process according to the invention in the form of a block diagram, and

Fig. 2 schematically represents the sampling and subsequent analysis of the sample.

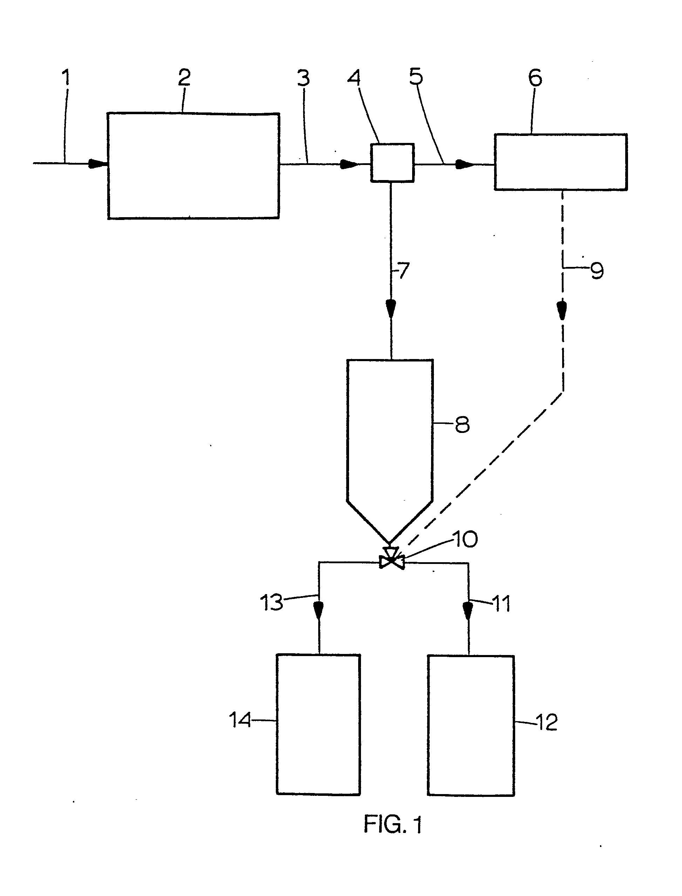

In Fig. 1 feedstocks are fed to polymerization unit 2 via line 1. These feedstocks include monomers, initiator or catalyst, and auxiliary materials such as antioxidants. Via line 3 polymer particles flow to sampling point 4. Via line 5 the sample is passed to analytical equipment 6, here indicated in the form of a block. The main flow of polymer particles enters residence time bunker 8 via line 7. The bottom of this bunker 8 is provided with distribution valve 10, which is controlled via signal transmission line 9. Depending on the nature of the signal, the product is sent from the bunker to storage bunker 12 via line 11 if it meets the specifications, or to storage bunker 14 via line 13 if it does not meet the specifications.

The residence time in bunker 8 is so long that the signal that at a certain point of time reaches valve 10 via 9 originates from the sample that is taken from the product passing the valve at the same point of time. Optionally a small safety margin can be built in to allow for a slight spread in residence time in the analytical equipment 6 and/or bunker 8. This safety margin can be up to 10% of the total residence time.

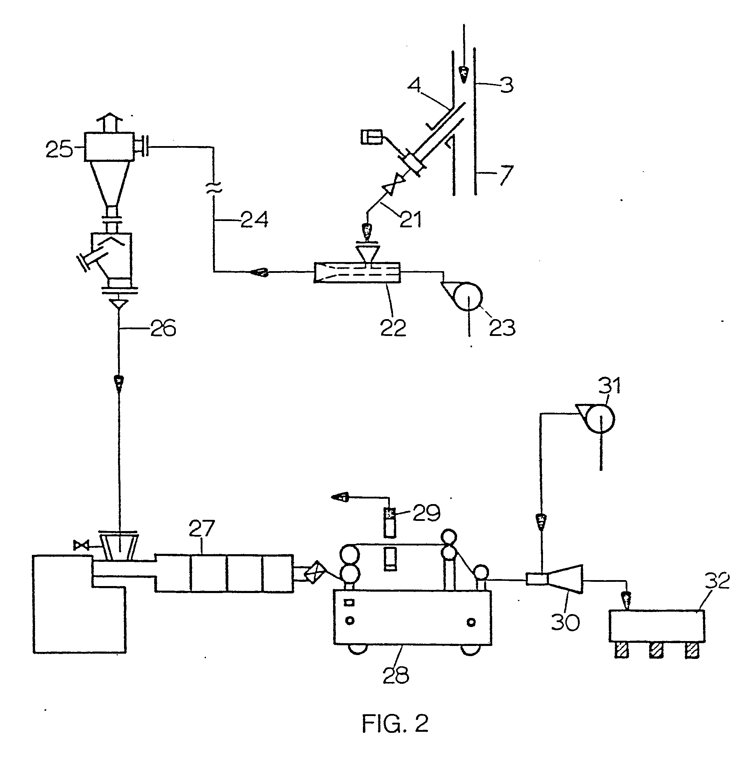

In Fig. 2 an embodiment of the sampling device and the analytical equipment is shown in more detail. Via line 3 a flow of polymer particles reaches sampling point 4. Via line 21, injector 22, booster 23 and line 24 a small portion of the flow of polymer particles enters cyclone 25. After separation from the transport air, the flow of polymer particles passes through line 26 to extruder 27, where the polymer particles are molten and extruded to film. The film is subsequently transported to apparatus 28, where the film is analysed with meter 29. The signal from 29 is sent to valve 10 via 9, optionally via a conversion equipment.

The film is subsequently discharged to waste bin 32 via injector 30 and booster 31.

### Example and Comparative Example

The process as described in the drawing, using a gel counter as analytical equipment, has been tested in a plant for the preparation of low-density polyethylene during a 6-month period. The percentage of product that was rejected on the basis of the process according to the invention, amounted to about 1,25 w.-%.

In a comparable period, during which the process according to the invention was not applied and during which comparable products were prepared, the percentage of product rejected on the basis of gel content, was about 3 w.-%.

### Claims

1. Process including the steps of the preparation of a polymer, followed by continuous inspection of the polymer quality and subsequently storage of the polymer, wherein a sample flow (5) is continuously drawn off from a flow of solid polymer particles (3) and this sample flow is analysed (6), characterized in that the flow of polymer particles (7), after drawing off of the sample flow (5), is led to residence time bunker (8) in which the residence time equals the time required for analysis or does not differ more than 10% therefrom, and the flow of polymer particles leaving the residence time bunker (8) is transported further dependent on the analytical result.

2. Process according to claim 1, characterized in that the sample flow (5) is supplied to an extruder (27), subsequently film is prepared and this film is analysed (29).

3. Process according to claim 2, characterized in that the film is analysed with a gel counter, a clarity meter and/or a gloss meter.

4. Process according to claims 1—3, characterized in that polyethylene of high-, medium- or low-density, polypropylene or PVC is prepared.

5. Process according to claim 4, characterized in that polyethylene is prepared under high perssure.

6. Installation for the preparation of a polymer, including a reaction section (2) and a first transport line (3, 7, 11, 13) for transporting a flow of solid polymer particles from the reaction section to a storage facility (12, 14), the transport line being provided with a sampling device (4), which sampling device is, via a second transport line (5), connected with an analytical equipment (6), characterized in that the analytical equipment can transmit a signal (9), to a distributing device (10), in the storage facility, while a residence time bunker (8) is installed in the transport line between the sampling device and the storage facility.

## Revendications

1. Procédé comprenant les étapes de la préparation d'un polymère, suivies par un contrôle continu de la qualité du polymère et ensuite du stockage du polymère, dans lequel un flux d'échantillon (5) est soutiré en continu d'un flux de particules de polymère solides (3) et ce flux d'échantillon est analysé (6), caractérisé en ce que le flux de particules de polymère (7), après soutirage du flux d'échantillon (5), est conduit dans un réservoir de stockage temporaire (8) dans lequel le temps de séjour est égal au temps nécessaire pour l'analyse ou ne diffère pas de plus 10% de celui-ci, et le flux de particules de polymère quittant le réservoir de stockage temporaire (8) est transporté plus loin selon le resultat analytique.

2. Procédé selon la revendication 1, caractérisé en ce que le flux d'échantillon (5) est introduit dans un extrudeur (27), un film est ensuite préparé et ce film est analysé (29).

3. Procédé selon la revendication 2, caractérisé en ce que le film est analysé avec un compteur de gel, un appareil de mesure de transparence et/ou un appareil de mesure de brillance.

4. Procédé selon les revendications 1—3, caractérisé en ce que du polyéthylène à densité élevée moyenne ou faible, du polypropylène ou du PVC est préparé.

5. Procédé selon la revendication 4, caractérisé en ce que du polyéthylène est préparé sous une pression élevée.

6. Installation de préparation d'un polymère, comprenant une section de réaction (2) et une première ligne de transport (3, 7, 11, 13) pour le transport d'un flux de particules de polymère solides de la section de réaction à l'installation de stockage (12, 14) la ligne de transport étant munie d'un dispositif d'échantillonnage (4), ce dispositif d'échantillonnage étant relié, par une seconde ligne de transport (5), à un équipement analytique, (6), caractérisée en ce que l'équipement analytique peut transmettre un signal (9) à un dispositif de distribution (10) dans l'installation de stockage, alors qu'un réservoir de stockage temporaire (8) est installé dans la ligne de transport entre le dispositif d'échantillonnage et l'installation de stockage.

## Patentansprüche

1. Verfahren umfassend die Stufen der Herstellung eines Polymers, gefolgt von kontinuierlicher Überwachung der Polymerqualität und anschließender Lagerung des Polymers, bei welchem ein Probenstrom (5) kontinuierlich aus einem Strom von festen Polymerteilchen (3) abgezogen und dieser Probenstrom analysiert wird (6), dadurch gekennzeichnet, daß der Strom der Polymerteilchen (7), nach dem Abziehen des Probenstroms (5), in einen Verweilzeitbehälter (8) geleitet wird, in welchem die Verweilzeit gleich der für die Analyse benötigten Zeit ist oder sich um nicht mehr als 10% von dieser unterscheidet, und der den Verweilzeit-Behälter (8) verlassende Strom von Polymerteilchen in Abhängigkeit vom Analysenergebnis weiterbefördert wird.

2. Verfahren nach Anspruch 1, dadurch gekennzeichnet, daß der Probenstrom (5) einem Extruder (27) zugeführt, anschließend ein Film hergestellt und dieser Film analysiert wird.

3. Verfahren nach Anspruch 2, dadurch gekennzeichnet daß der Film mittels eines Gelzählers, eines Klarheitsmessers und/oder eines Glanzmessers analysiert wird.

4. Verfahren nach den Ansprüchen 1 bis 3, dadurch gekennzeichnet, daß Polyäthylen hoher, mittlerer oder niedriger Dichte, Polypropylen oder PVC hergestellt wird.

5. Verfahren nach Anspruch 4, dadurch gekennzeichnet, daß Polyäthylen unter hohem Druck hergestellt wird.

6. Anlage zur Herstellung eines Polymers, umfassend einen Reaktionsabschnitt (2) und eine erste Transportleitung (3, 7, 11, 13) für den Transport eines Stromes von festen Polymerteilchen aus dem Reaktionsabschnitt zu einer Lagereinrichtung (12, 14), wobei die Transportleitung mit einer Probenentnahmevorrichtung (4) ausgestattet ist, welche Probenentnahmevorrichtung über eine zweite Transportleitung (5) mit einer Analysenvorrichtung (6) verbunden ist, dadurch gekennzeichnet, daß die Analysenvorrichtung ein Signal (9) zu einer Verteilervorrichtung (10) in der Lagereinrichtung übertragen kann, während ein Verweilzeit-Behälter (8) in der Transportleitung zwischen der Probenentnahmevorrichtung und der Lagereinrichtung angebracht ist.

FIG. 1

FIG. 2